# EUROPEAN PATENT SPECIFICATION

(11) **EP 3 488 209 B1**
(45) Date of publication and mention of the grant of the patent: **24.11.2021**
(21) Application number: 17758245.9
(22) Date of filing: 21.07.2017
(51) Int. Cl.: G01M 9/04, B64D 23/00, A63G 31/00

(54) **WIND TUNNEL SKYDIVING SIMULATOR**
WINDKANAL-FALLSCHIRMSPRUNGSIMULATOR
SIMULATEUR DE PARACHUTISME À SOUFFLERIE

(30) Priority: 21.07.2016 GB 201612638
(43) Date of publication of application: 29.05.2019
(73) Proprietor: Romanenko, Ruslan, Misato City, Saitama 341-0018 (JP); Parmanin, Alexandr, Misato City, Saitama 341-0018 (JP); Ivoninskii, Aleksandr, Misato City, Saitama 341-0018 (JP); Lisin, Svjatoslav, Misato City, Saitama 341-0018 (JP)
(72) Inventor: ROMANENKO, Ruslan, Misato City Saitama 341-0018 (JP); PARMANIN, Alexandr, Misato City Saitama 341-0018 (JP); IVONINSKII, Aleksandr, Misato City Saitama 341-0018 (JP); LISIN, Svjatoslav, Misato City Saitama 341-0018 (JP); SAVCHENKO, Ivan, Misato City Saitama 341-0018 (JP)
(74) Representative: Langley, Peter James
(86) International application number: PCT/GB2017/052145
(87) International publication number: WO 2018/015766

(56) References cited:
- EP-A1- 1 270 053
- WO-A1-2014/007600
- WO-A1-2017/103768
- WO-A1-2017/142461
- DE-C1- 4 241 574
- GB-A- 2 062 557
- GB-A- 2 288 772
- JP-A- S5 535 662
- JP-A- H03 131 289
- JP-A- 2007 097 813
- NZ-A- 568 424
- US-A- 5 593 352

## Description

### Technical Field

The present invention relates to a wind tunnel skydiving simulator of the recirculating air type. The term 'skydiving' should be construed to cover any sport or training activity that simulates falling or gliding through fast moving air, such as free-fall skydiving, wingsuit flying or gliding, wingpack flying or gilding, or indeed any other sport in which the sportsperson simulates falling or gliding at high speed.

### Background Art

A vertical wind tunnel (VWT) is a wind tunnel which moves air up in a vertical column. Vertical wind tunnels have been built for aerodynamic research for both objects (e.g. missile, planes) and also people (e.g. paratroopers, so that the aerodynamic behavior of their parachute packs can be tested). Recreational wind tunnels, frequently advertised as "indoor skydiving" or bodyflight, have also become a popular training tool for skydivers, and for entertainment. A recreational vertical wind tunnel enables human beings to experience the sensation of flight without planes or parachutes. Air moves upwards at approximately 195 km/h (120 mph or 55 m/s), the terminal velocity of a falling human body belly-downwards. The sensation is extremely similar to skydiving. The human body 'floats' in midair, replicating the physics of 'body flight' or 'bodyflight' experienced during freefall. Vertical wind speed can be adjusted at many vertical wind tunnels, usually between 130 and 300 km/h (80 and 185 mph, or 35 and 80 m/s), to accommodate the abilities of an individual and to compensate for variable body drag during advanced acrobatics.

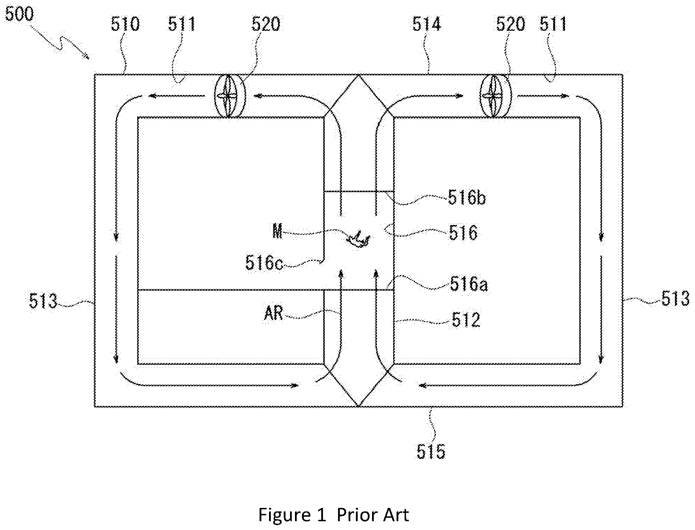

There is an extensive patent literature in this area, with US 4,457,509, dating from 1981, which describes a 'Levitationarium', which has many of the features of contemporary recirculating vertical wind tunnels. A typical prior art vertical wind tunnel is shown in **Figure 1****:** a skydiving simulator 500 is a recirculating wind tunnel 510 with two large rectangular loops, each loop forcing air up vertically through the flying chamber 516 and recirculating it using a pair of large axial fans that force the air back around each large loop and up again through the vertical flying chamber 516. The recirculating wind tunnel 510 includes a first vertical duct 512 that feeds air upwards through the flying chamber 516; a pair of second vertical ducts 513, 513 disposed in parallel to the first vertical duct 512 and that bring the air downwards; left and right side horizontal ducts 514 at the top of the wind tunnel connect the first vertical duct 512 to the left and right side vertical ducts 513; left and right side horizontal ducts 515 form the lower loop of the wind tunnel.

In the left and right side first horizontal ducts 514, 514 located at the top of the recirculating wind tunnel 510, axial fan air blowers 520, 520 are disposed to send air AR to the left and right side second vertical ducts 513, 513, respectively. A recirculating air pathway 511 is formed.

An entrance aperture or opening 516c, through which the flyer M enters and exits the flying chamber 516, is included in the side of the first vertical duct 512. The flying chamber 516, within which a flyer M flies, is situated in a section of the first vertical duct 512. In the flying chamber 516, the air AR from the blowers 520, 520 is adapted to move from below a floor surface 516a (typically a metal grid) to a ceiling 516b. One or more skilled flyers M can float upon and perform acrobatics on the high-speed vertically moving air AR.

The conventional vertical wind tunnel is designed to enable sportspersons to experience and practice the kinds of manouevers they would attempt during a freefall parachute jump.

In addition to freefall parachute jumping, there are now other sports in which sportspeople fall or glide through the air. Wingsuit flying is the sport of gliding through the air using a wingsuit which adds surface area to the human body to enable a significant increase in lift. A wingsuit modifies the body area exposed to wind to increase the desired amount of lift with respect to drag generated by the body. An attainable glide ratio of some wingsuits is 2.5:1 or more. This means that for every meter dropped, two and a half meters are gained moving forward. With body shape manipulation and by choosing the design characteristics of the wingsuit, fliers can alter both their forward speed and fall rate. The pilot manipulates these flight characteristics by changing the shape of the torso, de-arching and rolling the shoulders and moving hips and knees, and by changing the angle of attack in which the wingsuit flies in the relative wind and by the amount of tension applied to the fabric wings of the suit. (Reference: Wikipedia article on Wingsuit flying). Wingsuit gliding is very challenging and cannot be practiced in a vertical wind tunnel because the flight chamber is typically no more than 10m in diameter and so it is not possible to practice glide techniques.

NZ568424A discloses a closed circuit wind tunnel with an inclined section. JPH03131289A, English Abstract, discloses a doughnut-shaped skydiving facility.

### SUMMARY OF THE INVENTION

According to a first aspect of the invention, there is provided a wind tunnel skydiving simulator including a flight chamber, the flight chamber including an airflow entrance and a section that is inclined with respect to the vertical, said section being curved in the vertical plane, characterized in that the shape of the curved section is a smooth transition from approximately horizontal, at the airflow entrance, to approximately vertical. This enables the skilled sportsperson to practice wingsuit gliding and other sports where there is substantial forward motion through fast moving air - something impossible with a conventional vertical wind tunnel skydiving simulator. With this aspect of the invention, the air flowing past the flyer can hence include a substantial, sustained (for many minutes) horizontal, relative component - making wingsuit flying possible. Also, it enables experienced freefall skydivers (and sports people in other sports that need a significant horizontal component relative to the moving airstream) to practice moves with a significant (both forward and backwards) horizontal component.

Implementation features may include one or more of the following:
- The shape of the curve is a smooth transition from approximately horizontal at the airflow entrance to approximately vertical. This enables a flyer to choose the angle or angles he wishes to fly at and to move progressively between the vertical and horizontal sections.
- The first section of the flight chamber, where air enters the flight chamber, is at an angle of between 0 degrees and 45 degrees to the horizontal.
- The first section of the flight chamber, where air enters the flight chamber, is approximately horizontal.
- The final section of the chamber, from which air leaves the flight chamber, is at an angle of between 45 degrees and 90 degrees to the horizontal.
- The final section of the chamber is approximately vertical.
- The cross-sectional area of the flight chamber increases from the first section to the final section.
- The airspeed is substantially higher in the first section compared with the final section.
- The cross-sectional area of different parts of the flight chamber is adjustable to enable variations in the airspeed in the flight chamber.
- The adjustment to the cross-sectional area of different parts of the flight chamber is adjustable, for example in real-time, rapidly, to trigger rapid changes in the airflow environment.
- Different type of sporting activities are performed in different sections of the flight chamber.
- Free-fall activities are performed in the sections furthest from the first section of the flight chamber, which is closer to vertical or in fact vertical.
- Wing-suit activities, or other activities that need a significant horizontal component relative to the moving airstream, are performed in the curved sections of the flight chamber - the sections that are closest to the first section of the flight chamber, which is closer to horizontal or in fact horizontal.
- The base and/or floor and/or walls and/or roof of the flight chamber is made of a resilient, deformable material on which a person can stand.
- The resilient, deformable material is an inflatable material.
- The resilient, deformable material is an inflatable, sprung or elastic material, such as a trampoline.
- There are multiple entrances into the flight chamber.
- Different entrances into the flight chamber are at different distances from the first section of the flight chamber, where air enters the flight chamber.
- The walls or sides of the side chamber include windows or other transparent sections.
- An air confuser/contractor or zone with a contracting cross-sectional area is horizontal and in front of the first section.
- The air confuser/contractor or zone with a contracting cross-sectional area is adjustable in shape to vary the air speed.
- The adjustment to the air speed is made to enable optimal flying conditions for different wingsuit designs.
- The air confuser/contractor or zone with a contracting cross-sectional area has an asymmetric design.
- The wind tunnel is a recirculating air wind tunnel formed with a single loop, i.e. each end of the flight chamber is connected by single airflow pathway, including one or more fans.
- The single loop has a horizontal top section and a vertical downwards section, including one or more axial fans (typically 4 to 6 axial fans mounted side-by-side), and a horizontal air contractor at the base of the vertical downwards section, and the curved section of the wind tunnel then connects the horizontal air contractor with an expansion region at the top of the flight chamber; the expansion region then connects with the horizontal top section.
- The vertical flight chamber includes a retractable mesh at its base.
- The retractable base can be moved into position at the base of the vertical section for less experienced flyers or those wishing only to practice freefall skydiving.

Another aspect of the invention is a wind tunnel skydiving simulator that includes a flight chamber that is not entirely vertical.

Another aspect of the invention is a wind tunnel skydiving simulator that includes a flight chamber that is at least in part horizontal.

### Brief Description of Drawings

Aspects of the invention will now be described, by way of example(s), with reference to the following Figures, in which:
**Fig. 1** illustrates the structure of a typical prior art vertical skydiving simulator.
**Fig. 2** shows a curved wind tunnel skydiving simulator that implements an aspect of this invention.
**Figs. 3(a)** and **3(b)** illustrate a configuration of turning vanes according to one example or embodiment.
**Figs. 4(a)** and **4(b)** illustrate the structure of a flow straightener according to one example or embodiment.
**Figs. 5(a)** and **5(b)** illustrate a waiting chamber 50, a decompression chamber 57, and a flying chamber 20, in relation to a vertically oriented part of a wind tunnel skydiving simulator.
**Fig. 5(c)** illustrates a vertical cross sectional view of a surrounding wall 21 of the flying chamber 20.
**Figs. 6(a)** and **6(b)** illustrate the structure of a waiting chamber and a decompression chamber according to an example or embodiment, and shows that the flight chamber entrance has a curved surface that extends into the waiting chamber; this curved surface is designed to minimize the flow of turbulent air into the waiting chamber.
**Fig. 6(c)** illustrates a conventional example of a top frame 231 of a frame member 23.

### DETAILED DESCRIPTION

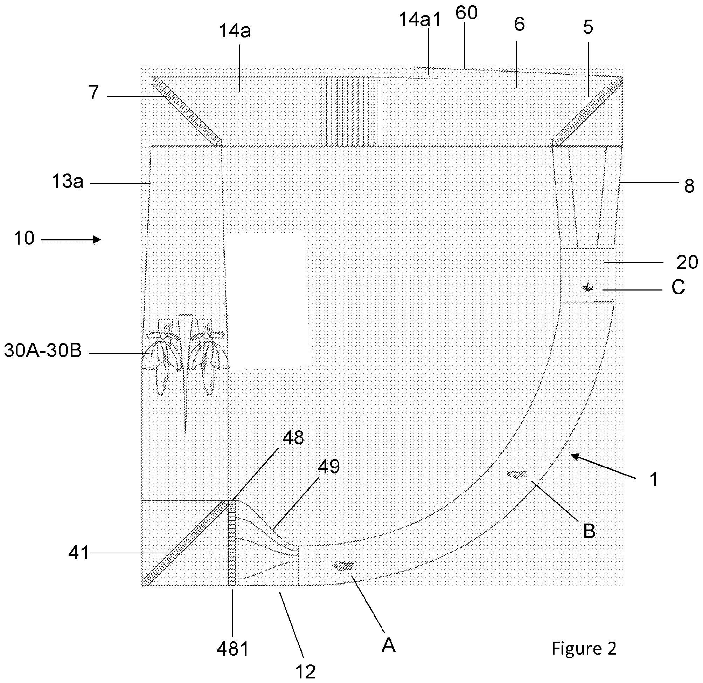

A skydiving simulator with a curved or inclined flight chamber will now be described. **Fig. 2** is a schematic cross-sectional view illustrating the structure of an example curved skydiving simulator 1.

### Overview

The key feature of this wind tunnel is that the flight chamber is not just a vertical chamber but instead includes an extended, inclined or curved flight chamber 1. The flight chamber starts at the lower left in **Figure 2**, and is entirely horizontal and then gradually rises up to the vertical, where it becomes the vertical flight chamber 20. This shape enables sportspersons to practice wingsuit gliding in very different conditions - for example, near the horizontal section of the flight chamber, the wingsuit glider A can practice techniques needed when maximizing the glide distance with a shallow attack angle. Where the flight chamber is inclined at about 45 degrees to the horizontal, then the sportsperson B can practice flying with a much steeper attack angle - i.e. simulating a glide path at 45 degrees. He can practice moving between these two areas by altering his attack angle and making other aerodynamic changes. In the vertical flight chamber section, the sportsperson C can practice conventional freefall and can also dive at a very steep attack angle down into the curved flight chamber 1, moving through position B to position A, and can move back up again by altering his attack angle or other aerodynamic characteristics.

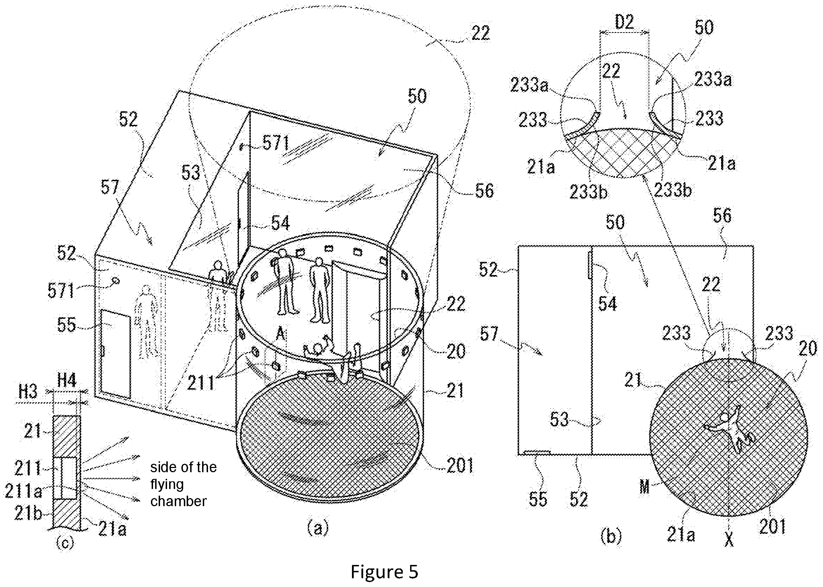

The base and, possibly also, the sides and top parts of the curved tunnel could be made of an resilient material that deforms on impact - for example, the sort of rubber used for a trampoline could be used to minimize injuries. The material could be inflatable and also in large parts transparent so that observers can watch the flyer inside. At the base of the vertical flight chamber 20 there is no safety mesh, unlike a conventional vertical tunnel, although it is possible to slide across a mesh for times when the vertical wind tunnel needs to have one, as shown for example in **Figure 5(a)**.

Typical dimensions for this curved wind tunnel with a single loop recirculating design would be a height from the base to the top of the horizontal duct of 30m - 50m. The flight chamber itself could be approximately 5m wide and 3m high in the curved section. The vertical section could have a 5m diameter and be 8m in height.

The other basic features of the curved wind tunnel are largely known. Around the vertical part 20 of the wind tunnel there is a waiting area and an entrance through which flyers pass. There can be other waiting areas and entrances at other parts of the curved wind tunnel - it is not necessary that the only entrance is at the vertical section.

Above the top end of the flight chamber 20 is an expansion zone 8 in which the airspeed drops to a level insufficient to support a flyer. A turning vane 5 in one corner of the top horizontal air duct 14a turns the moving air through 90 degrees. The air passes a cooling ventilator 60 which can be opened to allow hot air out and draw cool air in. At the far end of the top horizontal air duct 14a is another turning vane 7 which turns the moving air through 90 degrees, down the vertical duct 13a. A bank of large fans 30A - 30B, sucks the air down and forces it at high speed (e.g. 350 KM per hour) through lower turning vane 41. Typically 4 to 6 fans are needed to supply the very high speed air needed for this design. After the air leaves the lower turning vane 41, it passes through flow straightener 481, which then feeds the horizontal air constrictor 49. The air constrictor starts at its widest section 48 and then progressively narrows to speed up the airflow. The shape of the air constrictor 49 is asymmetric and flat bottomed. The shape can also be adjusted to alter the resultant airspeed. Because as many as 6 (or more) axial fans are used, the vertical duct or ducts are collectively much wider than a conventional wind tunnel, which might need to accommodate only two axial fans side-by-side. A consequence is that the air contractor 49 is also very wide at its front face, and significantly narrows to join the flight chamber 1.

We now discuss some supplemental features which may be implemented in the curved (or inclined) wind tunnel skydiving simulator that uses an aspect or aspects of this invention. Any one or more of these features can be combined with any one or more other features. These features may alternatively be implemented in a vertical wind tunnel skydiving simulator.

These supplemental features are organized into the following six categories:
**A. Minimizing turbulence features**
**B. Building construction features**
**C. Cooling features**
**D. Noise reduction features**
**E. Entertainment features**
**F. Organizing customers**

### A. Minimizing turbulence features

### A.1 Minimizing turbulence features: curved air deflector

A curved (or otherwise inclined to the vertical) wind tunnel skydiving simulator includes a flight chamber entrance that has a curved air deflector that extends into a waiting chamber, in which a convex surface of the curved air deflector faces across or towards the flight chamber entrance or into the flight chamber, and extends into the waiting chamber a sufficient distance to substantially reduce the flow of turbulent air into the waiting chamber.

The curved surface is at the top of the entrance and can also be at the sides. The extent and exact shape the curved surface takes depends on various factors; the key principle however is that it has to be sufficient to substantially reduce or minimize the flow of turbulent air into the waiting chamber; the effect is to make it more comfortable and less noisy for people in the waiting area. This also helps to preserve the laminar, non-turbulent flow of air in the flying chamber, even across the flight chamber entrance. This makes flying more comfortable and predictable.

The curved surface may be curved in one dimension - e.g. cylindrically curved - along its vertical section; the convex surfaces then face across the mouth of the entrance to the flight chamber, or face into the flight chamber. Across the top of the entrance, the curved surface can be curved in a more complex fashion, e.g. curved in two or three dimensions, and their convex surfaces face downwards or into the flight chamber. The curved surface extends into the waiting chamber by an amount that substantially exceeds the width of the walls of the entrance and any protective padding around that entrance. The extent or width of the curved surface is at least as large as the turbulent flow that hits this surface - i.e. all turbulent flow passing up across the face of the entrance is captured by the curved surface(s). The degree of curvature is chosen so that the turbulent flow that hits the convex surface does not separate significantly from the convex surface. Consequently, the amount of turbulent air moving into the flight chamber is significantly reduced compared to earlier approaches.

By ensuring that the sides of the entrance to the flight chamber are curved in this way, it also ensures that the risk of injury if a skydiver hits the entrance is much reduced, since the skydiver is not impacting a sharp corner or edge, but instead a smooth surface against which any impact forces can be much reduced, especially as the skydiver can slide across the curved surface readily.

The curved surface is made of flexible and impact absorbing material; such as several layers of rubber, FRP and metal. The actual shape may be defined by a complex spline. There are other shapes and dimensions that also work well - a simple radius can work also, but perfect shapes from an aerodynamic point of view are usually defined by a spline. The dimension should be comparable to a size of a turbulence and must fit the construction.

To re-cap, at the bottom edge of the flight chamber entrance, airflow separation occurs, leading to turbulent air passing up across the face of the flight chamber entrance; normally, without this aspect of the invention, this turbulent air enters the waiting area and also hits the top edge of the flight chamber entrance, causing more turbulent air to enter both the waiting area and also the flight chamber; the turbulent air in the flight chamber can negatively affect the flying experience. With this aspect of the invention, the flow of turbulent air into both the waiting area and also the flight chamber is significantly reduced.

The curved surface also eliminates the need for an air deflector in the flight chamber, positioned under the flight chamber entrance: air deflectors under the flight chamber entrance are normal for airtight flight chambers, but introduce some undesirable turbulence into the flight chamber. By adding the curved surface around the flight chamber entrance that extends into the waiting area, we not only remove the need for an air deflector under the flight chamber entrance and hence remove an object that contributes to turbulence in the flight chamber, but we also contribute to preserving the laminar, non-turbulent flow of air in the flying chamber, even across the flight chamber entrance.

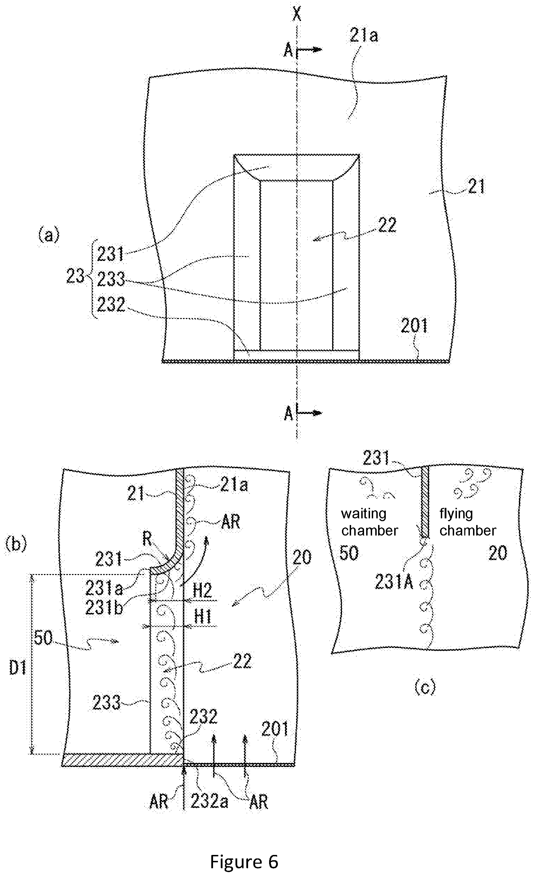

We can illustrate this with reference to **Figure 5** and **Figure 6****.** A waiting chamber 50 provided outside the vertical portion 20 of the flying chamber 1 will now be described. Other waiting chambers may be provided at entrances to other parts of the curved flight chamber.

**Figs. 5(a)** to **5(c)** illustrate the waiting chamber 50 and a decompression chamber 57; **Fig. 5(a)** is a schematic perspective view around the waiting chamber 50, decompression chamber 57, and flying chamber 20; **Fig. 5(b)** is a schematic plan view around the waiting chamber 50, decompression chamber 57, and flying chamber 20 seen from above; and **Fig. 5(c)** is a vertical cross-sectional view of a surrounding wall 21 around an LED device 211, taken along the plane A of **Fig. 5(a)****.**

**Figs. 6(a)** to **6(c)** illustrate a frame member 23 surrounding an entrance 22; **Fig. 6(a)** is a front view around the entrance 22 seen from the flying chamber 20; **Fig. 6(b)** is a cross-sectional view taken along the line A-A of **Fig. 6(a);** and **Fig. 6(c)** illustrates a conventional example or embodiment of a top frame 231 of the frame member 23.

**Fig. 5(c)** is included in order to explain the LED devices (light-emitting devices). **Figs. 6(a)** to **6(c)** are included in order to explain the structure of the entrance 22.

As shown in **Figs. 5(a)** and **5(b)****,** outside the flying chamber 20, the waiting chamber 50 surrounds the flying chamber 20.

The waiting chamber 50 is separated by a surrounding wall 21 surrounding the flying chamber 20, and by an outer wall 52 at a predetermined distance external to the surrounding wall 21. An entrance 22 to the flight chamber 20 is provided in the surrounding wall 21. The entrance 22 allows communication between the waiting chamber 50 and the flying chamber 20, enabling the flyer M to enter and exit the flying chamber 20.

Seen from inside the flying chamber 20, the entrance 22 has a rectangular shape in which, in its vertical direction, it is bilaterally symmetric relative to a diametric line X of the cylindrical surrounding wall 21 (see **Fig. 5(b)** and **Fig. 6(a)****)**.

Turbulence is generated due to separation of the air at all four edges of the entrance 22. To reduce this turbulence, the shape of the frame 23 surrounding the entrance 22 is devised so as to reduce the influence of the turbulent flow generated at the entrance 22. Specifically, a top frame 231 along the top edge of the entrance 22 and side frames 233, 233 extending from the opposite ends of the top frame 231 downward toward a bottom frame 232, are respectively curved outwardly from the flying chamber 20 (i.e., toward the waiting chamber 50) to form the frame 23. As noted earlier, the flight chamber entrance has a curved air deflector that extends into a waiting chamber, in which a convex surface of the curved air deflector faces downwards or into the flight chamber and extends into the waiting chamber a sufficient distance to substantially reduce the flow of turbulent air into the waiting chamber.

The turbulent flow generated at the bottom frame 232 will now be described. As shown in **Fig. 6(b)**, laminar flow of the air AR moving upward in the flying chamber 20 and passing over the bottom frame 232 of the entrance 22 breaks down as the air passes over the bottom frame 232 and, as a result of this, turbulent flow is generated at the bottom edge 232a of the frame 232. The turbulent flow thus generated moves toward the top frame 231. Here, when the top frame 231 is not formed to have a curved, convex shape as is shown in **Fig. 6(c)**, the turbulent flow that collides against an end 231A of the top frame 231 passes into both the flying chamber 20 and the waiting chamber 50. The turbulent flow that passes into the flying chamber 20 exerts an influence on the feeling felt by the flyer within the flying chamber 20 and can cause the flyer to have an uncomfortable feeling. The turbulent flow that passes into the waiting chamber 50 causes a slight vibration in the air in the waiting chamber that can cause the next flyer waiting in the waiting chamber 50 to have an uncomfortable feeling.

In the example or embodiment, as shown in **Fig. 6(b)**, the top frame 231 is curved in a direction in which the distance D1 between the top frame 231 and the bottom frame 232 becomes smaller towards an end 231a of the top frame 231, such that the end 231a is situated inside the waiting chamber 50. Curved, convex surface 231b faces the bottom frame 232.

In this way, when the turbulent flow generated at the bottom frame 232 moves to the top frame 231 and reaches the curved surface 231b, it moves toward the flying chamber 20, and not toward the waiting chamber 50. Almost all turbulent flow reaching the top frame 231 will move upward into the flying chamber 20 along the curved surface 231b, without moving into the waiting chamber 50. Curvature radius R of the curved surface 231b is set so that the turbulent flow moving along the curved surface 231b does not separate significantly from the curved surface 231b.

Furthermore, because the airflow that becomes turbulent by colliding against the bottom frame 232 tends to move toward the waiting chamber 50 as it is moving toward the top frame 231, a distance H1 of the curved surface 231b, measured from an inner wall surface 21a of the surrounding wall 21 to the end 231a of the curved surface, is set to be greater than the width H2 of the turbulent flow that reaches the top frame 231.

Consequently, much of the air that becomes turbulent by colliding against the bottom frame 232, upon reaching the curved surface 231b of the top frame 231, moves along the curved surface 231b and up along the inner wall surface 21a of the surrounding wall 21 inside the flight chamber 20.

Thus, the air AR that becomes turbulent by colliding against the bottom frame 232 does not move in towards the waiting chamber 50; this prevents the uncomfortable or sickening feeling felt by a flyer waiting in the waiting chamber 50 that would occur if turbulent air does pass into the waiting chamber 50.

Further, as shown in **Fig. 5(b)**, the sides of the entrance 22 to the flight chamber 233, 233 are also curved in a direction in which a distance D2 between the side frames becomes smaller toward ends 233a, 233a of the opening, such that the ends 233a, 233a are situated inside the waiting chamber 50; the curved convex portions 233b, 233b face the side frames, respectively.

Consequently, when the air AR moving upward in the flying chamber 20 collides against the curved portions 233b, 233b of the side frames 233, 233, the air AR is allowed to flow smoothly along the surfaces of the curved portions 233b, 233b, advantageously preventing turbulent flows from generating.

Further, because the top frame 231 and the side frames 233 of the frame 23, through which the flyer M enters and exits, are curved with their respective ends 231a, 233a being situated in the waiting chamber 50 (see the curved surface 231b in **Fig. 6(b)** and the curved surface 233b in **Fig. 5(b)****)**, even if the flyer M bumps against the curved surfaces during flight, the impact is reduced.

As shown in **Fig. 5(a)**, the waiting chamber 50 is provided in a small area at the lower section side of the flying chamber 20 at the floor level 201 of the flying chamber 20. The surrounding wall 21 surrounding the flying chamber 20 and the ceiling 56 of the waiting chamber 50 are formed by a transparent member (for example, an FRP or an acrylic resin).

Consequently, the next flyer waiting his turn in the waiting chamber 50 can readily watch the way the flyer M is flying in the flying chamber 20 through the surrounding wall 21 and the ceiling 56 formed out of a transparent member.

In the example or embodiment, the ceiling 56 of the waiting chamber 50 serves also as a floor of the second floor of the skydiving simulator, allowing an observer to stand on the ceiling 56 of the waiting chamber 50. Thus, through the ceiling 56 formed with a transparent member, the observer can watch the way the flyer M is flying in the flying chamber 20 from above.

### A.2 Minimizing turbulence features: recessed LEDs

As shown in **Figs. 5(a)** and **5(c)**, the surrounding wall 21 surrounding the flying chamber 20 is provided with a plurality of lighting devices (eg. light emitting diode (LED) devices 211) along its circumference. The devices, eg. LED devices 211, are recessed in the thickness of the surrounding wall 21, with its light emitting surfaces 211a facing the inside of the flying chamber 20.

It is noted that the LED devices 211 do not pass fully through the surrounding wall 21 into the flying chamber 20, but a thickness H3 of the surrounding wall 21 is kept between the LED devices 211 and the flying chamber 20 (see Fig. 5(c)). If the LED devices 211 protrude into the inside of the flying chamber 20 from an inner wall surface 21a of the surrounding wall 21, the LED devices 211 will disturb the flow of the air AR moving upward in the vicinity of the inner wall surface 21a of the surrounding wall 21. On the other hand, when the LED devices 211 are disposed on an outer wall surface 21b of the surrounding wall 21, the light emitted from the light emitting surfaces 211a of the respective LED devices 211 will be irregularly reflected in the thickness of the surrounding wall 21 formed with a transparent member; consequently, the LED devices 211 are not able to illuminate the inside of the flying chamber 20 properly.

In the example or embodiment, the LED devices 211 are therefore recessed into the thickness of the surrounding wall 21 in the manner that a predetermined thickness H3 is kept between the light emitting surfaces 211a of the respective LED devices 211 and the flying chamber 20. In this way, the LED devices 211 are not protruding into the inside of the flying chamber 20, and thus the LED devices 211 do not disturb the flow of the air AR moving in the vicinity of the inner wall surface 21a.

The thickness H3 of the surrounding wall 21, where the LED devices 211 are disposed, is thinner than a thickness H4 of the other part of the surrounding wall 21 (H3 < H4). Therefore, the light emitted from the light emitting surfaces 211a of the respective LED devices 211 is readily transmitted through the surrounding wall 21 having the thickness H3 so as to illuminate the inside of the flying chamber 20 properly.

### A.3 Minimizing turbulence features: extra-large turning vanes

Another feature that reduces turbulence is that the turning vanes positioned in the air ducts can be extra-large, with for example a 500mm chord length, for greater efficiency in altering the airflow direction. Conventional turning vanes are much smaller, with for example a 200-300mm chord length, but are less effective in altering air direction smoothly and without introducing turbulence. Larger turning vanes reduce pressure drop before and after the vanes making them more efficient than smaller turning vanes.

The turning vanes are made of extruded aluminium and are hence light and strong, and manufactured to a tightly controlled profile. There is 15cm separation between adjacent vanes so that only small turbulence/eddies can pass between them - this, together with the extra large chord length, helps preserve the non-turbulent, laminar flow of air through the ducts and eventually into the flight chamber.

### A.4 Minimizing turbulence features: thin walled, cellular stainless steel air straighteners

The airflow straighteners positioned under the flight chamber are made of stainless steel, thin-walled cells, e.g. with cells formed in a honeycomb arrangement. The cell width could take a range of sizes, such as approximately 129mm, with 75mm being the length of each hexagonal side; the depth of each cell is approximately 500mm. However other cell dimensions, including much smaller dimensions, are also possible. The cell walls have 0.3mm in thickness, but again far thinner cell walls, such as 0.05mm can also be used, especially where a smaller cell is used. Typical earlier flow straighteners were made of plastic and hence the cell walls had to be significantly thicker, which introduces higher drag (and hence undesirable heating) and turbulence.

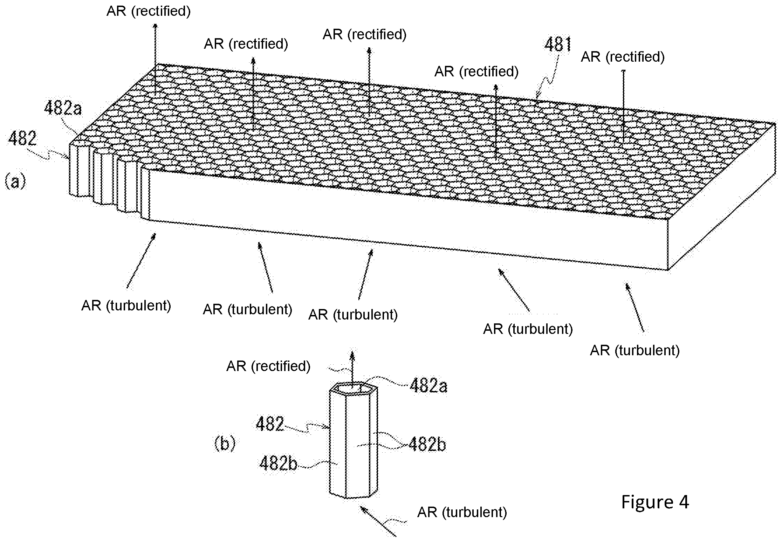

We can illustrate this with reference to **Figure 4**. A flow straightener 481 will be described, which is disposed just in front of the wide section 48 of airflow constrictor 49. **Figs. 4(a)** and **4(b)** illustrate the flow straightener 481. **Fig. 4(a)** is a schematic perspective view of a portion of the flow straightener 481, and **Fig. 4(b)** is a schematic perspective view of a tubular member 482 constituting the flow straightener 481.

As shown in **Figs. 4(a)** and **4(b)**, in the flow straightener 481, multiple tubular members 482, each having an opening that is substantially hexagonal seen cross-sectionally, is in contact with each other side 482b to side 482b, allowing no gap to be formed there between. In other words, the flow straightener 481 has a so-called "honeycomb" structure which is resistant to longitudinal (axial) compression stresses.

The flow straightener 481 is disposed across the flow cross section of the horizontal flow constrictor 49; the tubular members 482 are oriented so that its openings 482a are aligned in the direction of the airflow. Turbulent airflow is substantially reduced as the air passes up through the flow straightener 481 made up of the honeycomb grid of tubular members 482.

It should be noted that a flyer flying in this type of skydiving simulator can have a certain feeling (an uncomfortable or sickening feeling) which is different from one felt by a skydiver descending from an aircraft. The inventors conducted a study to figure out the cause for this and have found that a flyer will have an uncomfortable or sickening feeling when a turbulent flow is present in the airflow in the flight chamber 1.

As mentioned above, in the example or embodiment, the flow straightener 481 is provided in front of the curved flight chamber 1 so that the turbulent air AR is straightened through the flow straightener 481 before being sent into the flow constrictor 49 and then the flying chamber 1. In this way, the straightened, non-turbulent air AR will contact the flyer M; this reduces the uncomfortable or sickening feeling that can be felt by the flyer M within the flying chamber 1.

### B. Building construction features

### B.1 Building construction features: using FRP building materials

The expansion chamber 8 above the flight chamber is formed from fiber-reinforced plastic (FRP), such as fiberglass, and is shaped to enable a smooth transition from the circular x-section of the flight chamber to a rectangular x-section. FRP is an ideal material since it can be shaped into complex forms, allowing the smooth transition from a circular to square x-section, hence minimizing airflow turbulence. FRP is also relatively cheap to manufacture, even in complex shapes, and is light, making construction easier.

FRP also has good acoustic properties and reduces noise and vibration. The specific FRP used is a two layer FRP structure, approximately 90mm thick, with a honeycomb of FRP joining the two outer layers of smooth FRP. Different dimensions are also possible.

The axial fans in the system are placed in vertical ducts; the chamber above the or each axial fan is also formed from fiber-glass FRP, shaped to enable a smooth transition from the rectangular x-section of the duct above the fan to the circular x-section of the fan chamber. This smooth transition minimizes airflow turbulence.

### B.2 Building construction features: the decompression chamber

The flight chamber is at a lower pressure than atmospheric pressure; it is entered from a waiting area through an always-open entrance. The waiting area is separated from the main part of the building by a decompression chamber and there is an airtight door between the decompression chamber and the waiting area and there is another airtight door between the decompression chamber and the main part of the building. Adjacent to each door (or built into it or in the same wall as each door) is a pneumatic valve; so one valve is placed between the external area and the decompression chamber, and the other is placed between the waiting chamber and the decompression chamber. When both sealed doors of the decompression chamber are closed, the valve corresponding to the door which is going to be opened next is opened to smoothly equalize the pressure, to avoid damage to hearing.

We can illustrate this using **Figure 5****.** A decompression chamber 57 is adjacent to the waiting chamber 50. As shown in **Fig. 2**, the diameter of the short lower horizontal duct 12 is smallest at the start of the flying chamber 1, i.e. just after the constrictor 49. Consequently, the velocity of the air AR is highest as it enters the flying chamber 1, and the air pressure within the flying chamber 1 and the waiting chamber 50 that is in communication with the flying chamber 1 is lower than the pressure outside the flight chamber 1 (i.e., the outside is at atmospheric pressure). Therefore, when the flyer M abruptly exits the flying chamber 1 or the waiting chamber 50 to the outside of the flight chamber 1 (i.e., to an environment under atmospheric pressure), he may have an uncomfortable feeling due to the pressure difference.

In order to reduce this pressure difference associated with the flyer M's entering and exiting the waiting chamber 50 (the flying chamber 20), the skydiving simulator 10, as shown in **Figs. 5(a)** and **5(b)**, is provided with a decompression chamber 57 between the waiting chamber 50 and the area outside that is at atmospheric pressure.

The decompression chamber 57 is air-tight, and is defined by an outer wall 52 and an inner wall 53 of the waiting chamber 50.

The inner wall 53 separates the decompression chamber 57 from the waiting chamber 50 and is provided with a pressure-resistant door 54 for allowing and disallowing communication between the decompression chamber 57 and the waiting chamber 50. The outer wall 52 separates the decompression chamber 57 from a space outside the first vertical duct 12 and is provided with a pressure-resistant door 55 for allowing and disallowing communication between the decompression chamber 57 and the space outside.

Thus, the decompression chamber 57 is separated from the waiting chamber 50 and the space outside by the airtight pressure-resistant doors 54, 55; therefore, when both of the pressure-resistant doors 54, 55 are closed, the pressure in the decompression chamber 57 is maintained constant.

In the skydiving simulator 10, the pressure-resistant doors 54, 55 are controlled so that they cannot be open at the same time, in order to prevent air in the waiting chamber 50 from leaking outside the flight chamber 1 by way of the decompression chamber 57.

For example, when a flyer who finishes flying intends to exit the waiting chamber 50 to go outside, he opens the pressure-resistant door 54, i.e., the second of the two pressure-resistant doors, with the pressure-resistant door 55, i.e., the first of the two pressure-resistant doors, being shut, to enter the decompression chamber 57. Then, he closes the second pressure-resistant door 54 and gradually turns up the pressure in the decompression chamber 57 to the pressure outside of the first vertical duct 12 (i.e., atmospheric pressure). Finally, the flyer M opens the first pressure-resistant door 55 with the second pressure-resistant door 54 being shut to go outside. In this way, the flyer M gets accustomed to the pressure difference between the pressure in the waiting chamber 50 (the flying chamber 20) and atmospheric pressure before going outside; therefore, an uncomfortable feeling due to an abrupt pressure change is eased.

As mentioned above, in the skydiving simulator 10, the first pressure-resistant door 55 is always kept shut while the second pressure-resistant door 54 is open. In this way, when a flyer who finishes flying intends to exit the waiting chamber 50 to go outside, the waiting chamber 50 and the outside are not in direct communication with each other; therefore, the air in the waiting chamber 50 does not leak outside the first vertical duct 12. Consequently, the next flyer waiting for his turn is now able to fly without being influenced by the first flyer's exiting from the waiting chamber 50.

Furthermore, the outer wall 52 and the inner wall 53 defining the decompression chamber 57 include multiple pressure regulators 571 (more than two in the example or embodiment) so that when the pressure in the decompression chamber 57 exceeds a predetermined value, it is lowered to a set value by actuation of the regulators 571.

This prevents over-pressuring in the decompression chamber 57.

In turn, when a next flyer waiting for his turn intends to enter the waiting chamber 50 from the outside, he opens the first pressure-resistant door 55 with the second pressure-resistant door 54 being shut to enter the decompression chamber 57. Then, he closes the first pressure-resistant door 55 and gradually turns down the pressure in the decompression chamber 57 from atmospheric pressure to a pressure substantially the same as the pressure inside the flying chamber 20. Finally, the flyer M opens the second pressure-resistant door 54 with the first pressure-resistant door 55 being shut to enter the waiting chamber 50. In this way, the flyer M gets accustomed to the pressure difference between the pressure in the waiting chamber 50 and the pressure outside before entering the waiting chamber 50; therefore, there should be no uncomfortable feeling felt by the flyer due to an abrupt pressure change.

As mentioned above, in the skydiving simulator 10, the second pressure-resistant door 54 is always kept shut while the first pressure-resistant door 55 is open. In this way, the waiting chamber 50 and the outside are not in direct communication with each other; therefore, the air in the waiting chamber 50 does not leak outside. Consequently, the flyer M who is flying currently is able to continue the flight without being influenced by the next flyer's entering into the waiting chamber 50.

### B.3 Building construction features: Cooling Ventilator

A cooling ventilator 60 is an apparatus for changing the air AR flowing through the recirculating wind tunnel 10 for fresh air from the outside of the recirculating wind tunnel 10, and also for cooling the air AR that is heated due to frictional heat generated between the air AR and the inner wall surfaces of the recirculating wind tunnel 10 during recirculation of the air AR in the recirculating wind tunnel 10.

As shown in **Fig. 2**, ventilators 60 are provided on the upper wall of the top horizontal duct 14a. The ventilator 60 is configured to permit opening and closing of a portion of the upper wall 14a1 such that the old air AR in the wind tunnel 10 is released into the atmosphere and in turn fresh atmospheric air is taken into the wind tunnel 10 simultaneously.

As mentioned above, the cooling ventilator 60 operates to release the air AR flowing through the recirculating wind tunnel 10 into the atmosphere as well as to cool down the temperature of the air AR that is heated during recirculation in the recirculating wind tunnel 10 by taking fresh air from the atmosphere into the recirculating wind tunnel 10.

It should be noted that ventilation of the recirculating wind tunnel 10 by the cooling ventilator 60 is performed not only when the flyer M is flying but also when the flyer M is not flying. In the latter condition, the blowers 30A, 30B need not send the air AR at the velocity needed for flying in the flight chamber 20; the blowers 30A, 30B can then be operated at a lower rotational speed, reducing the noise they make.

### B.4 Building construction features: axial fans mounted in their own ducts

There are axial fans, e.g. four to six axial fans, in the vertical column 13A; each axial fan sits inside its own duct. There are several advantages to this approach. First, mounting the axial fans in the vertical columns places less stress on the bearings, compared with the more common horizontal mounting. Including each axial fan in its own duct aids rapid and efficient construction since the axial fans can be pre-fabricated off site into a complete duct; at the construction site, a pair of separate ducts need only be assembled in position and next to one another.

### B.5 Building construction features: pressure sensors

Pressure sensors are positioned outside of the flight chamber and inside the flight chamber; the sensors continuously monitor air pressure and can shut down the entire system rapidly if air pressure in the flight chamber rises above a defined level. If the air pressure in the flight chamber starts equalizing to external pressure due to some reason, then the pressure in all other ducts can rise rapidly. Also, this rise in air pressure usually creates unexpected wind inside the whole building, which can damage some interior fittings, internal doors, windows etc. It is therefore safer to shut down the entire system, including the fans, since then the ducts will no longer be carrying high speed airflows. Shutting down the axial fans will reduce the velocity, and so the pressure difference and so the possible consequences. Note that we are concerned here with static pressure, not dynamic. When the fans are off, the pressure is equal to atmospheric everywhere. Higher the speed, lower the pressure inside the flight chamber compared to atmospheric. This is because the ducts with air inlets and outlets are not airtight and so the pressure on the top of the building is equalized to atmospheric. The rest of the loop is airtight, and so the pressure inside depends on air speed (see Bernoulli's Equation). The air speed in the wind tunnel is different everywhere. In the flight chamber it is maximal, and then it becomes lower and lower. The lowest speed is under the air jet. When something happens in the flight chamber, so it becomes not airtight, it will suck the air and equalize the pressure to atmospheric.

The situation in other ducts of wind tunnel will depend on many factors (how much air is sucked into the flight chamber, how far the air inlets and outlets are opened, etc.) and generally is unpredictable. However, the resulting strong winds inside the building can damage interior, doors and windows.

### B.6 Building construction features: CO2 sensors

CO2 sensors in the flight chamber automatically open the air exchangers if CO2 levels rise too high.

### B.7 Building construction features: Miscellaneous

Fibre-optic lines connect each frequency controller to a fan; there is dual redundancy in all control lines.

A glass floor is built around a double-height flight chamber, at about half-way up. A glass floor enables us to maximize the available floor area; the total size e.g. footprint of the building may be restricted by zoning or planning laws, so a glass floor is an effective way of adding floor area without compromising on the aesthetics of a very tall space. The lower flight chamber has 4m height and circular 4.5m radius; the upper chamber also has 4m height and expands from 4.5m radius at its base. The glass floor is built at the top of the lower flight chamber and enables viewers to stand and watch flyers in the lower and upper flight chambers.

### C. Cooling features

The turning vanes have internal coolant channels. Because the turning vanes are unusually large, with for example a 500mm chord length, the coolant channels can be large and hence carry a high volume of coolant, and there is also large surface area of turning vane; these factors combine to make the turning vanes very effective at cooling the air passing over them. The coolant channels in the vanes are designed to withstand high pressure (e.g. high pressure chlorofluorocarbon (e.g. Freon) at 10ATM). There are leakage detectors adjacent to the cooling vanes to detect leakage of coolant and automatically shut down the affected section of cooling vanes.

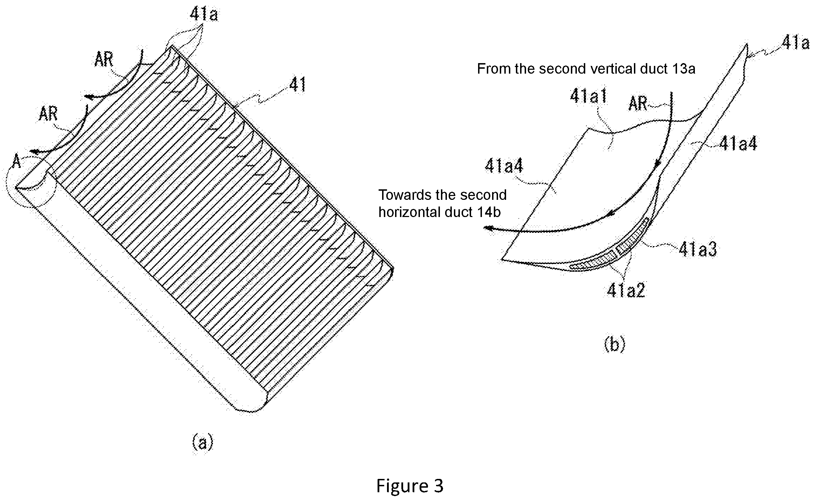

We can illustrate this with reference to **Figure 3**. **Figs. 3(a)** and **3(b)** illustrate the turning vane 41: **Fig. 3(a)** is a schematic perspective view showing the turning vane 41, and **Fig. 3(b)** is an enlarged cross-sectional view of region A in **Fig. 3(a)**.

As shown in **Fig. 3(a)**, in the turning vanes 41, a plurality of vane members 41a are disposed in parallel to each other in the thickness direction at regular intervals. As shown in **Fig. 3(b)**, the individual vane member 41a has a curved shape in which a middle portion 41a3 is thicker than the edges of the vane; the leading edge of the vane presents a sharp, low drag face to the incoming airstream. Due to this configuration, the air AR exiting the blower 30A and flowing downward through the vertical duct 13a is redirected along the curvature of the base 41a1 of multiple directing vane members 41a disposed transversely to the flow of air AR through the vertical duct 13a to flow toward the curved flight chamber. In this way, the turning vanes efficiently re-direct the air through 90°.

The middle portion 41a3 of the base 41a1 of the vane member 41a is thicker than the leading and trailing edges 41a4, 41a4 of the vane member 41a, and includes a pair of channels 41a2 along the length of the vane member 41a; the channels are separated by a spar that give rigidity to the vane. The channels 41a2 serves as a passage through which a cooling fluid is passed to effect overall cooling of the vane member 41a. In the example or embodiment, the air AR from the blowers 30A, 30B is recirculated along the recirculating pathway in the recirculating wind tunnel 10, producing friction between the recirculating air AR and inner wall surfaces of the recirculating wind tunnel 10. Consequently, the temperature of the air AR gradually increases due to frictional heat generated between the air AR and the inner wall surfaces of the recirculating wind tunnel 10 during recirculation of the air AR in the recirculating wind tunnel 10. When the temperature of the air in the recirculating wind tunnel 10 becomes too high, the flyer M within the flying chamber 20 will have difficulty in flying.

In the configuration mentioned above, as the air AR changes its direction passing over the turning vane, heat is exchanged between the air AR and the cooled bases 41a1, such that the temperature of the air AR is lowered to a temperature suitable for flight.

The cooling fluid can be chlorofluorocarbons (CFCs), long life coolants (LLCs), or the like. The generic term, chlorofluorocarbon, is used in the specification because "Freon" is a registered trademark of DuPont (U.S.).

### D. Noise reduction features

### D.1 Noise reduction features: air exhaust panel on the top duct

A large air exchanger in the top, horizontal ducts includes an air exhaust system formed by a large, horizontally hinged panel in the upper surface of the top, horizontal ducts. This arrangement minimizes noise pollution since the noise of the fans and moving air escapes is then directed upwards; conventional recirculating vertical wind tunnels often have air exhausts in the side or vertical ducts directing noise to people around the wind tunnel.

The air exchanger in the top ducts also includes an air inlet system formed by vertically hinged panels in the side (i.e. vertical) surfaces of the top ducts.

All of the vertical and horizontal ducts are mounted on vibration dampers (all ducts are vibration damped in this way, apart from the glass walls and the ducts at the bottom of wind tunnel).

### D.2 Noise reduction features: noise sensors

Noise sensors inside and outside of the facility continuously monitor noise levels for compliance with regulations, and the system can act to reduce noise when needed (e.g. reduce power automatically if air outlets need to be open; close air outlets automatically if power needs to be maintained).

### E. Entertainment features

### E.1 Entertainment features: UV lighting

UV lights may be used to illuminate the flight chamber; UV reflective clothing or equipment is used by the flyers to reflect UV light when all of the ordinary lights are turned low/off for special lighting effects.

### E.2 Entertainment features: Matrix of RGB LEDs

A matrix of RGB LEDs may be used in the expansion chamber above the flight chamber for special lighting effects. The RGB LEDs can be used to give orientation for sportsmen inside the flying chamber (e.g. north/east/south/west sides may be coloured differently, so that flyers are always aware about their position during performance of complex tricks); for setting the tempo of performance (useful in multiple flyers training) and for training games, like 'touch the red spot'. Lights are used to illuminate the turning vanes.

### E.3 Entertainment features: LEDs in glass panel seams

The seam or join between the glass panels surrounding the flight chamber include embedded lighting (e.g. LED strips). Embedding the lighting into the seams avoids the reflections that occur if they are outside of the glass panels.

### E.4 Entertainment features: 3D reconstruction

Multiple cameras film the flight chamber to enable 3D reconstruction of the shape and movement of each flyer.

One or more depth sensors (e.g. Kinect) detect and model objects in the flight chamber to enable 3D reconstruction of the shape and movement of each flyer.

### E.5 Entertainment features: augmented reality display helmet

Helmets worn by flyers include an augmented reality display. Information (e.g. projected onto the normal transparent visor) can include time remaining to fly, instructions (e.g. a graphic indicating how to change position - especially useful when a group or team is practicing synchronized manoeuvres etc), real-time video of person flying so he can see mistakes or adjustments. The flyer can hence clearly see the flight chamber around him or her, but in addition can see the information on the augmented reality display. The helmet can be linked to a Radio-frequency identification (RFID) tag that is worn by the flyer to uniquely identify that flyer to the system that provides the real-time information to the helmet-based augmented reality display.

### E.6 Entertainment features: immersive reality display helmet

Helmets worn by flyers provide an immersive 3D reality on an integrated high resolution display, such as an Oculus Rift. Immersive reality can provide real-time video images of the flyer, generated by cameras and depth sensors, real-time video images of an instructor, video images of virtual scenes (e.g. jumping from plane, passing close to other flyers, manoeuvres with other flyers in a skydiving team, a parachute deploying etc.). So the flyer no longer views the flight chamber around him or her (although a real-time video of that could be streamed from a helmet mounted camera), but instead views only the scene generated by the immersive reality system. The helmet can be linked to a RFID tag that is worn by the flyer to uniquely identify that flyer to the system that provides the real-time information to the helmet-based augmented reality display.

### F. Organizing customers

Flyers wear RFID tags (e.g. on helmets or suits). The RFID tags enable a computer-implemented system to know who is where in the building (e.g. in decompression chamber, in waiting area, in flight chamber, somewhere else); this enables:
∘ control of the time spent in the decompression chamber, in the waiting area, in the flight chamber;
∘ control of when each session starts, when a flyer enters the decompression chamber, and then the waiting area, and then the flight chamber;
∘ automatic setting of appropriate airspeed, and lighting;
∘ automatic sending of flyers photos/videos to correct destination (email, FB account etc.);
∘ power consumption for different clients and types of client (e.g. novice, mid-level, experienced sportsman etc.) to be known, which in turn enables optimization of costs charged to each type of client.

RFIDs are also useful when there are several flyers in the chamber as the computer implemented billing system can then automatically charge either a single flyer for the session, or share the cost equally amongst all the flyers, or some other permutation. Display screens in the centre will show timetable and timeline of all events also.

Flyers each wear vibration alert devices (e.g. wrist-mounted vibration devices, or an app running on a smartwatch with a vibration function). This allows flyers to be informed with a vibration alert when they need to move to the decompression area, prepare to enter flight chamber, exit flight chamber etc. High noise levels and/or ear plugs used by flyers can make it hard for them to hear spoken instructions.

Dynamic pricing for flying sessions is possible. Pricing will be based on various parameters, such as loading, time of day, whether marketing is planned prior to the sessions, and other events affecting popularity.

IP telephony integration is provided. This enables someone handling an incoming call from a customer to have that customer automatically identified using caller ID and for that customer's records to be automatically and immediately displayed to the call handler, giving the background, history and any specific needs of that customer.

### Appendix 1

### Summary of Supplemental Features that can be used with the Curved Wind Tunnel

In this appendix, we categorise the supplemental features into the following 20 separate features, labeled A - S, which can be used with the inclined or curved wind tunnel. Note that each concept can be combined with any one or more of the other concepts. The concepts may alternatively be used in the case of a vertical wind tunnel.
A. An inclined or curved wind tunnel skydiving simulator including a flight chamber entrance that has a curved air deflector that extends into a waiting chamber, in which a convex surface of the curved air deflector faces across or towards the flight chamber entrance or into the flight chamber, and extends into the waiting chamber a sufficient distance to substantially reduce the flow of turbulent air into the waiting chamber.
   - The curved surface is at the top of the entrance and then the convex side of the surface faces downwards and across the flight chamber entrance, or into the flight chamber.
      ∘ The curved surface is curved in two or more dimensions.
      ∘ The curvature of the curved surface is defined by a spline.
   - The curved surface is at the sides of the entrance and then the convex side of the surface faces inwards or across the mouth of the entrance, or into the flight chamber.
      ∘ The curved surface is curved in one dimension, as a cylinder is curved in one dimension.
   - The curved surface extends into the waiting chamber by an amount that substantially exceeds the width or thickness of the entrance side wall and any protective padding around that entrance.
   - The curved surface extends into the waiting chamber by an amount that substantially exceeds the width or thickness of the entrance side wall and any protective padding around that entrance, with the extent or width of the curved surface being at least as large as the turbulent flow that hits this surface - i.e. so that all turbulent flow passing up across the face of the entrance is captured by the curved surface(s).
   - The degree of curvature of the convex surface(s) is chosen so that the turbulent flow that hits the convex surface does not separate significantly from the convex surface.
   - The extent and exact shape of the curved surface is designed to preserve the laminar, non-turbulent flow of air in the flying chamber, even across the flight chamber entrance.
   - The curved surface is made of flexible and impact absorbing material.
   - The curved surface includes several layers of rubber, and also FRP and metal.
   - The curved surface removes the need for an air deflector under the entrance.
B. An inclined or curved wind tunnel skydiving simulator including turning vanes positioned in the air ducts and that are extra-large, with for example a chord length greater than 350mm and ideally 500mm, for greater efficiency in altering the airflow direction.
   - The turning vanes are made of extruded aluminium.
   - There is an approximately 15cm separation between adjacent vanes so that only small turbulence/eddies can pass between them. Different dimensions are also possible to achieve this outcome.
C. An inclined or curved wind tunnel skydiving simulator including airflow straighteners positioned under the flight chamber and that are made of metal, such as stainless steel, with thin-walled cells of thickness less than 0.5mm - for example, 0.05 mm thin walls may be used
   - thin-walled cells of thickness of 0.3mm - 0.05mm.
   - The cells are formed in a honeycomb arrangement.
   - The cell width could be approximately 129mm, with 75mm being the length of each hexagonal side; the depth of each cell is approximately 500mm. However, other sizes are possible; for example the cells could be far smaller.
D. An inclined or curved wind tunnel skydiving simulator including a duct that is formed from fibre-reinforced plastic (FRP), such as fiberglass, and is shaped to enable a smooth transition from one shape, such as a circular x-section to a rectangular x-section, or a rectangular x-section to a circular x-section.
   - The shaped duct is a chamber above the flight chamber, and is shaped to enable a smooth transition from the circular x-section of the flight chamber to a rectangular x-section.
   - The shaped duct is a chamber above the or each axial fan, shaped to enable a smooth transition from the rectangular x-section of the duct above the fan to the circular x-section of the fan chamber.
   - The FRP is a two layer FRP structure, with a honeycomb of FRP joining the two outer layers of smooth FRP.
   - The FRP is approximately 90mm thick; different dimensions are also possible.
E. An inclined or curved wind tunnel skydiving simulator including a waiting area is separated from the main part of the building by a decompression chamber and there is an airtight door between the decompression chamber and the waiting area and another airtight door between the decompression chamber and the main part of the building;
   and adjacent to each door (or built into it) is a pneumatic valve and when both sealed doors of the decompression chamber are closed, the valve corresponding to the door which is going to be opened next is opened to smoothly equalize the pressure, to avoid damage to hearing.
F. An inclined or curved wind tunnel skydiving simulator including four or more axial fans in the vertical column; and in which each axial fan sits inside its own duct.
   - The axial fans are pre-fabricated off site into a complete duct; at the construction site, the separate ducts are assembled in position and next to one another.
G. An inclined or curved wind tunnel skydiving simulator including pressure sensors that are positioned outside of the flight chamber and inside the flight chamber; the sensors continuously monitor air pressure and can shut down the entire system rapidly if air pressure in the flight chamber rises above a defined level.
H. An inclined or curved wind tunnel skydiving simulator including CO2 sensors in the flight chamber that automatically cause air exchangers to be opened if CO2 levels rise too high.
I. An inclined or curved wind tunnel skydiving simulator including a glass floor that is built around a double-height flight chamber, at about half-way up.
J. An inclined or curved wind tunnel skydiving simulator including turning vanes that have internal coolant channels.
   - Turning vanes are extra-large, with for example a chord length greater than 350mm and ideally 500mm, for greater efficiency in altering the airflow direction.
   - The turning vanes are made of extruded aluminium.
   - The coolant channels in the vanes are designed to withstand high pressure (e.g. high pressure chlorofluorocarbon (e.g. Freon) at 10ATM).
   - There are leakage detectors adjacent to the cooling vanes to detect leakage of coolant and automatically shut down the affected section of cooling vanes.
K. An inclined or curved wind tunnel skydiving simulator including a large air exchanger in the top, horizontal ducts that includes an air exhaust system formed by a large, horizontally hinged panel in the upper surface of the top, horizontal ducts.
   - The air exchanger in the top ducts also includes an air inlet system formed by vertically hinged panels in the side (i.e. vertical) surfaces of the top ducts.
L. An inclined or curved wind tunnel skydiving simulator including noise sensors inside and outside of the facility that continuously monitor noise levels for compliance with regulations, and the noise sensors provide data to a system that can act to reduce noise when needed.
   - The system can reduce power automatically if air outlets need to be open.
   - The system can close air outlets automatically if power needs to be maintained.
M. An inclined or curved wind tunnel skydiving simulator including UV lights that are used to illuminate the flight chamber and UV reflective clothing or equipment used by the flyers to reflect UV light when all of the ordinary lights are turned low/off for special lighting effects.
N. An inclined or curved wind tunnel skydiving simulator including multiple cameras filming the flight chamber to enable 3D reconstruction of the shape and movement of each flyer.
O. An inclined or curved wind tunnel skydiving simulator including one or more depth sensors that can detect and model objects in the flight chamber to enable 3D reconstruction of the shape and movement of each flyer.
P. A helmet worn by flyers in an inclined or curved wind tunnel skydiving simulator, the helmet including an augmented reality display.
   - Information (e.g. projected onto the normal transparent visor of the helmet) can include time remaining to fly, instructions (e.g. a graphic indicating how to change position - especially useful when a group or team is practicing synchronized manoeuvres etc.), of a person flying so he can see performance, mistakes or adjustments.
   - The flyer can hence clearly see the flight chamber around him or her, but in addition can see the information on the augmented reality display.
   - The helmet is linked to a RFID tag that is worn by the flyer to uniquely identify that flyer to the system that provides the real-time information to the helmet-based augmented reality display.
Q. A helmet worn by flyers in an inclined or curved wind tunnel skydiving simulator, the helmet providing an immersive 3D reality on an integrated high resolution display, such as an Oculus Rift.
   - Immersive reality provides any of: real-time video images of the flyer, generated by cameras and depth sensors, real-time video images of an instructor, video images of virtual scenes (e.g. jumping from plane, passing close to other flyers, manouevers with other flyers in a skydiving team, a parachute deploying etc.).
   - Helmet includes a camera to provide real-time video of the scene in the flight chamber.
   - The helmet is linked to a RFID tag that is worn by the flyer to uniquely identify that flyer to the system that provides the real-time information to the helmet-based augmented reality display.
R. An RFID tag adapted to be worn by a flyer in an inclined or curved wind tunnel skydiving simulator (e.g. on helmets or suits), in which the RFID tag communicates with a computer-implemented system to enable that system to know who is where in the building (e.g. in decompression chamber, in waiting area, in flight chamber, somewhere else).
   - The RFID tag enables the system to know and to control the time spent in the decompression chamber, in the waiting area, in the flight chamber by each flyer.
   - The RFID tag enables the system to know and to control when each session starts, when a flyer enters the decompression chamber, and then the waiting area, and then the flight chamber.
   - The RFID tag enables the system to automatically set an appropriate airspeed, and/or lighting for the persons flying.
   - The RFID tag enables the system to automatically send photos/videos of flyers to the correct destination (email, social media account etc.).
   - The RFID tag enables the system to know and to control the power consumption for different clients and types of client (e.g. novice, mid-level, experienced sportsman etc).
   - The RFID tag enables the system to control the amount to be charged to each customer or type of customer.
   - Flyers each wear vibration alert devices (e.g. wrist-mounted vibration devices, or an app running on a smartwatch with a vibration function) to allow flyers to be informed with a vibration alert when they need to move to the decompression area, prepare to enter flight chamber, exit flight chamber etc.
   - S. An inclined or curved wind tunnel skydiving simulator including a matrix of RGB LEDs is used in the expansion chamber above the flight chamber for special lighting effects.
      ∘ The RGB LEDs are used to give orientation for sportsmen inside the flying chamber.
      ∘ north/east/south/west sides may be coloured differently, so that flyers are always aware about their position during performance of complex tricks).
      ∘ The RGB LEDs are used for setting the tempo of performance (useful in multiple flyers training).
      ∘ the RGB LEDs are controlled so that one or more LEDs become targets to be touched or reached as part of training games.

## Claims

1. A wind tunnel skydiving simulator including a flight chamber (1, 20), the flight chamber (1, 20) including an airflow entrance and a section that is inclined with respect to the vertical, said section being curved in the vertical plane, **characterized in that** the shape of the curved section is a smooth transition from approximately horizontal, at the airflow entrance, to approximately vertical.

2. The wind tunnel of Claim 1, in which a first section of the flight chamber (1, 20), where air enters the flight chamber (1, 20), is at an angle of between 0 degrees and 45 degrees to the horizontal.

3. The wind tunnel of Claim 2, in which the first section of the flight chamber (1, 20), where air enters the flight chamber (1, 20), is approximately horizontal.

4. The wind tunnel of preceding Claim 2, in which a final section of the flight chamber (1, 20), from which air leaves the flight chamber (1, 20), is at an angle of between 45 degrees and 90 degrees to the horizontal.

5. The wind tunnel of Claim 4, in which the final section of the flight chamber (1, 20) is approximately vertical.

6. The wind tunnel of Claims 4 or 5, in which the cross-sectional area of the flight chamber (1, 20) increases from the first section to the final section.

7. The wind tunnel of preceding Claim 6 in which the airspeed is substantially higher in the first section compared with the final section.

8. The wind tunnel of preceding Claim 6 or 7, (i) in which the cross-sectional area of different parts of the flight chamber (1, 20) is adjustable to enable variations in the airspeed in the flight chamber, or (ii) in which the cross-sectional area of different parts of the flight chamber (1, 20) is adjustable, such as in real-time, rapidly, to trigger rapid changes in the airflow environment.

9. The wind tunnel of any preceding Claim in which the base or floor of the flight chamber (1, 20) is made of a resilient, deformable material on which a person can stand.

10. The wind tunnel of preceding Claim 9, (i) in which the resilient, deformable material is an inflatable material, or (ii) in which the resilient, deformable material is an inflatable, sprung or elastic material, such as a trampoline.

11. The wind tunnel of any of Claims 2 to 8, the wind tunnel including an air confuser or zone with a contracting cross-sectional area which is horizontal and in an area in front of the first section in order to increase air velocity.

12. The wind tunnel of Claim 11, (i) in which the air confuser or zone with a contracting cross-sectional area is adjustable in shape to vary the air speed, or (ii) in which an adjustment of the air confuser or zone with a contracting cross-sectional area to the air speed is made to enable optimal flying conditions for different wingsuit designs, or (iii) in which the air confuser or zone with a contracting cross-sectional area has an asymmetric design.

13. The wind tunnel of any preceding Claim in which the wind tunnel is a recirculating air wind tunnel (510) formed with a single loop, i.e. each end of the flight chamber is connected by single airflow pathway, including one or more fans (30A, 30B).

14. The wind tunnel of Claim 13, in which the single loop has a horizontal top section (14a) and a vertical downwards section (13a), including one or more axial fans (30A, 30B), and a horizontal air contractor (49) at the base of the vertical downwards section (13a), and the curved section of the wind tunnel then connects between the horizontal air contractor (49) and an expansion region (8) above the top of the flight chamber (1), the expansion chamber (8) then connecting with the horizontal top section (14a).

15. The wind tunnel of any preceding Claim, including a flight chamber entrance (22) that has a curved air deflector (231, 233) that extends into a waiting chamber (50), in which a convex surface (231b, 233b) of the curved air deflector (231, 233) faces across or towards the flight chamber entrance (22) or into the flight chamber (1, 20), and extends into the waiting chamber (50) a sufficient distance to substantially reduce the flow of turbulent air into the waiting chamber (50).

## Patentansprüche

1. Windkanal-Fallschirmsprungsimulator, umfassend eine Flugkammer (1, 20), wobei die Flugkammer (1, 20) einen Luftstromeingang und einen gegenüber der Vertikalen geneigten Abschnitt umfasst, wobei der Abschnitt in der Vertikalebene gekrümmt ist, **dadurch gekennzeichnet, dass** die Form des gekrümmten Abschnitts ein sanfter Übergang von annähernd horizontal am Luftstromeingang zu annähernd vertikal ist.

2. Windkanal nach Anspruch 1, wobei ein erster Abschnitt der Flugkammer (1, 20), an dem Luft in die Flugkammer (1, 20) eintritt, in einem Winkel zwischen 0 Grad und 45 Grad zur Horizontalen liegt.

3. Windkanal nach Anspruch 2, wobei der erste Abschnitt der Flugkammer (1, 20), an dem Luft in die Flugkammer (1, 20) eintritt, ungefähr horizontal ist.

4. Windkanal nach Anspruch 2, wobei ein letzter Abschnitt der Flugkammer (1, 20), aus dem die Luft die Flugkammer (1, 20) verlässt, in einem Winkel zwischen 45 Grad und 90 Grad zur Horizontalen liegt.

5. Windkanal nach Anspruch 4, wobei der letzte Abschnitt der Flugkammer (1, 20) ungefähr vertikal ist.

6. Windkanal nach Anspruch 4 oder 5, wobei die Querschnittsfläche der Flugkammer (1, 20) vom ersten Abschnitt bis zum letzten Abschnitt zunimmt.

7. Windkanal nach Anspruch 6, wobei die Luftgeschwindigkeit im ersten Abschnitt wesentlich höher ist als im letzten Abschnitt.

8. Windkanal nach Anspruch 6 oder 7, (i) wobei die Querschnittsfläche verschiedener Teile der Flugkammer (1, 20) einstellbar ist, um Variationen der Luftgeschwindigkeit in der Flugkammer zu ermöglichen, oder (ii) wobei die Querschnittsfläche verschiedener Teile der Flugkammer (1, 20), beispielsweise in Echtzeit, schnell einstellbar ist, um schnelle Änderungen der Luftstromumgebung auszulösen.

9. Windkanal nach einem der vorhergehenden Ansprüche, wobei die Basis oder der Boden der Flugkammer (1, 20) aus einem elastischen, verformbaren Material besteht, auf dem eine Person stehen kann.

10. Windkanal nach Anspruch 9, (i) wobei das elastische, verformbare Material ein aufblasbares Material ist, oder (ii) wobei das elastische, verformbare Material ein aufblasbares, gefedertes oder elastisches Material, wie etwa ein Trampolin, ist.

11. Windkanal nach einem der Ansprüche 2 bis 8, wobei der Windkanal einen Luftkonfusor oder eine Zone mit einer sich verengenden Querschnittsfläche umfasst, die horizontal und in einem Bereich vor dem ersten Abschnitt liegt, um die Luftgeschwindigkeit zu erhöhen.

12. Windkanal nach Anspruch 11, (i) wobei der Luftkonfusor oder die Zone mit einer sich verengenden Querschnittsfläche in seiner/ihrer Form einstellbar ist, um die Luftgeschwindigkeit zu variieren, oder (ii) wobei eine Anpassung des Luftkonfusors oder der Zone mit einer sich verengenden Querschnittsfläche an die Luftgeschwindigkeit erfolgt, um optimale Flugbedingungen für verschiedene Wingsuit-Ausführungen zu ermöglichen, oder (iii) wobei der Luftkonfusor oder die Zone mit einer sich verengenden Querschnittsfläche eine asymmetrische Ausführung aufweist.

13. Windkanal nach einem der vorhergehenden Ansprüche, wobei der Windkanal ein Umluftwindkanal (510) ist, der mit einer einzelnen Schleife ausgebildet ist, d.h. jedes Ende der Flugkammer ist durch einen einzelnen Luftstromweg verbunden, der ein oder mehrere Gebläse (30A, 30B) umfasst.

14. Windkanal nach Anspruch 13, wobei die einzelne Schleife einen horizontalen oberen Abschnitt (14a) und einen vertikalen nach unten verlaufenden Abschnitt (13a), der einen oder mehrere Axialgebläse (30A, 30B) umfasst, und einen horizontalen Luftkontraktor (49) an der Basis des vertikalen nach unten verlaufenden Abschnitts (13a) aufweist und der gekrümmte Abschnitt des Windkanals dann zwischen dem horizontalen Luftkontraktor (49) und einem Expansionsbereich (8) oberhalb der Oberseite der Flugkammer (1) anschließt, wobei sich die Expansionskammer (8) dann mit dem horizontalen oberen Abschnitt (14a) verbindet.

15. Windkanal nach einem der vorhergehenden Ansprüche, umfassend einem Flugkammereingang (22), der einen gekrümmten Luftdeflektor (231, 233) aufweist, der sich in eine Wartekammer (50) erstreckt, wobei eine konvexe Oberfläche (231b, 233b) des gekrümmten Luftdeflektors (231, 233) quer über oder in Richtung des Flugkammereingangs (22) oder in die Flugkammer (1, 20) weist und sich in die Wartekammer (50) über eine ausreichende Strecke erstreckt, um die Strömung der turbulenten Luft in die Wartekammer (50) wesentlich zu reduzieren.

## Revendications

1. Simulateur de parachutisme à soufflerie comprenant une chambre de vol (1, 20), la chambre de vol (1, 20) comprenant une entrée d'écoulement d'air et une section qui est inclinée par rapport à la verticale, ladite section étant incurvée dans le plan vertical, **caractérisé par le fait que** la forme de la section incurvée est une transition douce d'approximativement horizontale, à l'entrée d'écoulement d'air, à approximativement verticale.

2. Soufflerie selon la revendication 1, dans laquelle une première section de la chambre de vol (1, 20), où l'air entre dans la chambre de vol (1, 20), est à un angle d'entre 0 degré et 45 degrés par rapport à l'horizontale.

3. Soufflerie selon la revendication 2, dans laquelle la première section de la chambre de vol (1, 20), où de l'air entre dans la chambre de vol (1, 20), est approximativement horizontale.

4. Soufflerie selon la revendication 2 précédente, dans laquelle une section finale de la chambre de vol (1, 20), à partir de laquelle l'air quitte la chambre de vol (1, 20), est à un angle d'entre 45 degrés et 90 degrés par rapport à l'horizontale.

5. Soufflerie selon la revendication 4, dans laquelle la section finale de la chambre de vol (1, 20) est approximativement verticale.

6. Soufflerie selon l'une des revendications 4 ou 5, dans laquelle l'aire en coupe transversale de la chambre de vol (1, 20) augmente de la première section à la section finale.

7. Soufflerie selon la revendication 6 précédente, dans laquelle la vitesse de l'air est sensiblement plus élevée dans la première section par comparaison avec la section finale.

8. Soufflerie selon l'une des revendications 6 ou 7 précédente, (i) dans laquelle l'aire en coupe transversale de différentes parties de la chambre de vol (1, 20) est ajustable pour permettre des variations de la vitesse de l'air dans la chambre de vol, ou (ii) dans laquelle l'aire en coupe transversale de différentes parties de la chambre de vol (1, 20) est ajustable, tel qu'en temps réel, rapidement, pour déclencher des changements rapides dans l'environnement d'écoulement d'air.

9. Soufflerie selon l'une quelconque des revendications précédentes, dans laquelle la base ou le plancher de la chambre de vol (1, 20) est constitué(e) d'un matériau souple, déformable, sur lequel une personne peut se tenir debout.

10. Soufflerie selon la revendication précédente 9, (i) dans laquelle le matériau souple, déformable, est un matériau gonflable, ou (ii) dans laquelle le matériau souple, déformable, est un matériau gonflable, à ressort ou élastique, tel qu'un trampoline.

11. Soufflerie selon l'une quelconque des revendications 2 à 8, la soufflerie comprenant un dispositif de convergence d'air ou une zone avec une aire en coupe transversale se contractant qui est horizontale et dans une zone devant la première section afin d'augmenter la vitesse de l'air.

12. Soufflerie selon la revendication 11, (i) dans laquelle le dispositif de convergence d'air ou la zone avec une aire en coupe transversale se contractant a une forme ajustable pour faire varier la vitesse de l'air, ou (ii) dans laquelle un ajustement du dispositif de convergence d'air ou de la zone avec une aire en coupe transversale se contractant, par rapport à la vitesse de l'air, est effectué pour permettre des conditions de vol optimales pour différentes conceptions de combinaison ailée, ou (iii) dans laquelle le dispositif de convergence d'air ou la zone avec une aire en coupe transversale se contractant a une conception asymétrique.

13. Soufflerie selon l'une quelconque des revendications précédentes, dans laquelle la soufflerie est une soufflerie à recirculation d'air (510) comportant une seule boucle, c'est-à-dire que chaque extrémité de la chambre de vol est raccordée par un seul trajet d'écoulement d'air, comprenant un ou plusieurs ventilateurs (30A, 30B).

14. Soufflerie selon la revendication 13, dans laquelle la seule boucle a une section supérieure horizontale (14a) et une section descendante verticale (13a), comprenant un ou plusieurs ventilateurs axiaux (30A, 30B), et un contracteur d'air horizontal (49) à la base de la section descendante verticale (13a), et la section incurvée de la soufflerie se raccorde ensuite entre le contracteur d'air horizontal (49) et une région d'expansion (8) au-dessus de la partie supérieure de la chambre de vol (1), la chambre d'expansion (8) se raccordant ensuite à la section supérieure horizontale (14a).

15. Soufflerie selon l'une quelconque des revendications précédentes, comprenant une entrée de chambre de vol (22) qui a un déflecteur d'air incurvé (231, 233) qui s'étend dans une chambre d'attente (50), dans laquelle une surface convexe (231b, 233b) du déflecteur d'air incurvé (231, 233) est tournée à travers ou vers l'entrée de chambre de vol (22) ou dans la chambre de vol (1, 20), et s'étend dans la chambre d'attente (50) sur une distance suffisante pour réduire sensiblement l'écoulement d'air turbulent dans la chambre d'attente (50).
